# EUROPÄISCHE PATENTSCHRIFT

(11) **EP 1 543 264 B1**
(45) Veröffentlichungstag und Bekanntmachung des Hinweises auf die Patenterteilung: **19.03.2008**
(21) Anmeldenummer: 03798024.0
(22) Anmeldetag: 28.08.2003
(51) Int. Cl.: F16L 3/22, F16L 3/10

(54) **ROHRSCHELLE**
PIPE CLIP
COLLIER D'ATTACHE POUR TUYAUX

(30) Priorität: 25.09.2002 CH 161302
(43) Veröffentlichungstag der Anmeldung: 22.06.2005
(73) Patentinhaber: PMA AG, 8610 Uster (CH)
(72) Erfinder: KLEEB, Ralf, CH-8344 Bäretswil (CH); HÜPPI, Roger, CH-Vaduz (CH)
(74) Vertreter: Bruderer, Werner
(86) Internationale Anmeldenummer: PCT/CH2003/000584
(87) Internationale Veröffentlichungsnummer: WO 2004/029492

(56) Entgegenhaltungen:
- EP-A- 1 209 397
- FR-E- 95 704
- US-A- 3 216 683
- US-B1- 6 173 926

## Beschreibung

Die Erfindung betrifft eine Rohrschelle, umfassend ein Ober- und ein Unterteil, welche eine Durchlassöffnung für ein Rohr umschliessen, wobei diese beiden Teile an einer Seite über ein Scharnier miteinander verbunden sind und an der anderen Seite lösbare Feststellelemente aufweisen.

Rohrschellen dieser Art sind beispielsweise aus EP A1 602 456 bekannt. Die hier beschriebene Rohrschelle besteht aus je einem halbkreisförmigen Unterteil und einem Oberteil, welche über ein Steckscharnier schwenkbar miteinander verbunden sind. Auf der dem Scharnier gegenüberliegenden Seite der beiden Teile der Rohrschelle sind Laschen angeordnet, an welchen einerseits eine Mutter und anderseits eine Schraube angeordnet ist, um die beiden Teile der Rohrschelle zusammenzuspannen. Zudem weist die Rohrschelle an einem Teil eine Gewindemutter auf, welche die Befestigung der Rohrschelle an einem Gewindezapfen ermöglicht. Derartige Rohrschellen sind geeignet, um einzelne Rohr zu befestigen. Es können jedoch keine Rohre, welche in mehreren Ebenen übereinander liegen, befestigt werden. Zudem ist auch das Schliessen der Rohrschelle über die Schraubverbindung beschwerlich und an schwer zugänglichen Stellen schwierig. Insbesondere im Fahrzeugbau ist es jedoch oft notwendig, mehrere Rohre nebeneinander zu befestigen und zusätzlich können auch mehrere Rohre in mehreren Lagen übereinander angeordnet sein. Die Befestigung derartiger Gruppen von Rohren ist in der Praxis nur mit komplizierten Zusatzeinrichtungen möglich und erfordert einen erheblichen Aufwand. Dokument US 6173926 beschreibt eine Rohrschelle entsprechend dem Oberbegriff des Anspruchs 1.

Es ist deshalb Aufgabe der Erfindung, eine Rohrschelle zu schaffen, welche an einem Trägerelement einfach vormontiert werden kann, insbesondere an Tragschienen, wie sie im Fahrzeugbau gebräuchlich sind. Im Weiteren soll die Rohr schelle stapelbar sein, so dass mehrere Lagen von Rohren übereinander angeordnet werden können und gleichzeitig soll die Rohrschelle einfach verschliessbar sein, sowie für leichte wie für schwere Belastungen geeignet sein.

Diese Aufgabe wird durch die im Patentanspruch 1 definierten Merkmale gelöst. Vorteilhafte Weiterbildungen der Erfindung sind in den Unteransprüchen definiert.

Die Anordnung von je einer Auflagefläche am Ober und am Unterteil, wobei diese Auflageflächen nach aussen gerichtet und parallel zueinander angeordnet sind, ermöglicht ein vereinfachtes Befestigen des Unterteiles an einem Trägerelement und erlaubt das sichere Aufeinanderstapeln von zwei oder mehreren Rohrschellen der erfindungsgemässen Art. Im unteren Teil der Rohrschelle ist eine Bohrung angebracht, welche von der Durchlassöffnung für das Rohr ausgeht und an der Auflagefläche des Unterteiles austritt. In diese Durchlassöffnung ist ein Befestigungsmittel, beispielsweise eine Schraube, einführbar, womit das Unterteil der Rohrschelle an einem Trägerelement, beispielsweise einer in einer Tragschiene gleitend angeordneten Mutter, befestigt werden kann. Dadurch kann das Unterteil, bzw. die Rohrschelle in einfacher Weise vormontiert werden. Zusätzlich zum lösbaren Feststellelement der beiden Teile der Rohrschelle ist in einem Seitenbereich derselben eine Durchgangsbohrung angeordnet, welche der Aufnahme eines zusätzlichen Verbindungselementes dient. Dieses Verbindungselement ermöglicht eine zusätzliche Befestigung der Rohrschelle am Trägerelement und ermöglicht zusätzlich ein verstärktes Zusammenspannen der beiden Teile der Rohrschelle. Dies kann beispielsweise durch eine Schraube erfolgen, welche durch diese Durchgangsbohrung gesteckt und im Trägerelement mit einer Mutter verbunden ist. Durch diese Anordnung können zusätzliche Kräfte aufgenommen werden und die erfindungsgemässe Rohrschelle ist deshalb auch für schwere Belastungen geeignet. Schwerste Belastungen können aufgenommen werden, wenn an beiden Seitenbereichen der Rohrschelle eine Durchgangsbohrung zur zusätzlichen Aufnahme von zwei Verbindungselementen angeordnet ist.

Die Ausgestaltung des lösbaren Feststellelementes zwischen dem Ober- und dem Unterteil der Rohrschelle als Schnappverschluss ermöglicht das einfache Schliessen der Rohrschelle, sobald das Rohr eingelegt ist. Dieser Schnappverschluss verbindet das Ober- und das Unterteil der Rohrschelle mit genügend grossen Schliesskräften, um leichte bis mittelgrosse Belastungen sicher aufnehmen zu können. In diesen Fällen ist das Anbringen von zusätzlichen Verbindungselementen an den Seitenbereichen der Rohrschelle nicht notwendig. Der Schnappverschluss ist auch leicht lösbar, so dass Umbauten der Rohrinstallationen erleichtert werden. Der Schnappverschluss besteht aus einem am Unter- oder Oberteil angeordneten, federnden Verbindungselement und einem am anderen Teil der Rohrschelle angeordneten, entsprechenden Rückhalteteil. Diese Teile greifen hakenförmig und federnd ineinander, sobald das Ober- und das Unterteil der Rohrschelle durch Verschwenken um das Scharnier geschlossen werden. Ein weiterer Vorteil ergibt sich dadurch, dass das Unterteil der Rohrschelle Seitenteile aufweist, welche sich über die Mittelachse der Durchlassöffnung für das Rohr hinaus in Richtung des Oberteiles-erstrecken. Dadurch werden Seitenführungen gebildet und diese Seitenführungen halten das eingelegte Rohr besser in der gewünschten Position, bis die Rohrschelle geschlossen wird. Zudem eröffnet sich dadurch die Möglichkeit, dass das Oberteil der Rohrschelle nicht mehr ein Halbteil bildet, sondern kleiner gebaut werden kann. Dadurch benötigt es weniger Raum zum Ausschwenken und es können Rohrschellen direkt seitlich aneinander gestossen werden. Zudem ermöglicht diese Anordnung die Anordnung des Scharniers zwischen dem Ober- und dem Unterteil an der obersten Kante der Rohrschelle. Diese vorteilhafte Bauweise erleichtert ebenfalls das seitliche Zusammenschieben von benachbarten Rohrschellen und ermöglicht eine optimale und kompakte Anordnung der geführten Rohre. Ein weiterer Vorteil der erfindungsgemässen Anordnung besteht darin, dass sich das Oberteil nur über einen Bereich von weniger als 180° des Umfanges der Durchlassöffnung für das Rohr erstreckt. Dabei wird ein Endbereich des Oberteiles und zwar derjenige, welcher das Scharnier umfasst, durch eine fiktive Ebene begrenzt, welche durch die Längsachse der Durchlassöffnung für das Rohr und die Achse des Scharniers zwischen den beiden Teilen des Scharniers gelegt ist. Diese Anordnung ermöglicht das Öffnen des Oberteiles der Rohrschelle, ohne dass durch die Schwenkbewegung Klemmkräfte zwischen Oberteil und eingelegtem Rohr entstehen. Diese Anordnung ist insbesondere dann vorteilhaft, wenn das Scharnier oberhalb der Mittelebene der Durchlassöffnung für das Rohr angeordnet ist.

Die erfindungsgemässe Ausgestaltung des Unter und Oberteiles der Rohrschelle ermöglichen es, zwei oder mehrere Rohrschellen übereinander zu stapeln. Dazu dienen die nach aussen gerichteten Auflageflächen, welche parallel zueinander verlaufen. Die Befestigung der übereinander gestapelten Rohrschellen erfolgt da- , bei über die zusätzlichen Verbindungselemente, welche durch mindestens eine der Durchgangsbohrungen in einen Seitenbereich der Rohrschellen gesteckt werden. Durch diese Montagemöglichkeit der erfindungsgemässen Rohrschellen lassen sich in einfacher Weise mehrlagige Rohrbündel sicher und rasch, befestigen. Wenn die übereinander gestapelten Rohrschellen mit zwei Verbindungselementen miteinander verbunden werden, können auch grosse Kräfte aufgenommen werden. In ihrer optimierten Form ist es vorteilhaft, wenn die erfindungsgemässe Rohrschelle in geschlossenem Zustand eine quaderförmige Aussenform aufweist, welche etwa im Zentrum die Durchlassöffnung für das Rohr aufweist.

Die Erfindung wird anhand von Ausführungsbeispielen in Verbindung mit den Zeichnungen näher erläutert. Dabei zeigen:
- Fig. 1: eine Ansicht einer erfindungsgemässen Rohrschelle in geschlossenem Zustand,
- Fig. 2: eine Aufsicht auf die Oberseite der Rohrschelle gemäss Fig. 1, und
- Fig.3: einen Querschnitt durch eine erfindungsgemässe Rohrschelle in offenem Zustand.

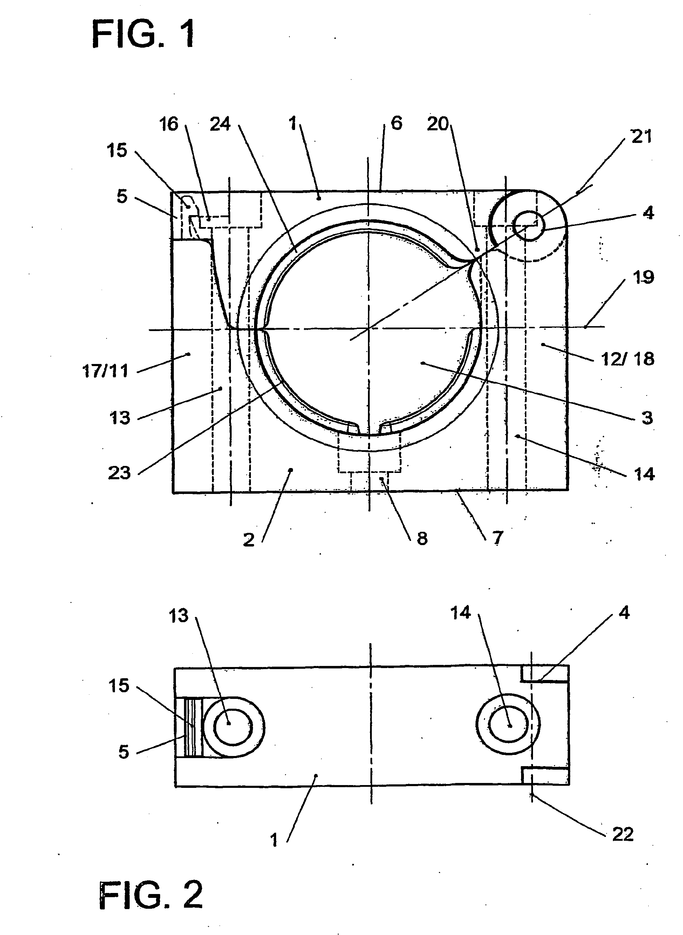

Die in Fig. 1 dargestellte Rohrschelle umfasst ein Oberteil 1 und ein Unterteil 2. Diese beiden Teile 1, 2 umfassen in geschlossenem Zustand eine Durchlassöffnung 3 für ein Rohr, welches in einer bestimmten Position festgehalten werden soll. Im dargestellten Beispiel handelt es sich um eine Rohrschelle für Wellrohre, weshalb das Oberteil 1 und das Unterteil 2 der Rohrschelle im Bereiche der Durchlassöffnung 3 Rippen 23 aufweisen, welche in entsprechende Vertiefungen am Wellrohr eingreifen. Das Oberteil 1 und das Unterteil 2 sind über ein Scharnier 4 schwenkbar miteinander verbunden. An der gegenüberliegenden Seite der Rohrschelle greifen das Oberteil 1 und das Unterteil 2 in geschlossenem Zustand über lösbare Feststellelemente 5 ineinander, wodurch die beiden Teile 1, 2 in der geschlossenen Position gehalten werden. Diese Feststellelemente 5 bestehen in vorteilhafter Weise aus einem Schnappverschluss, welcher einerseits ein federndes Verbindungselement 15 und anderseits ein Rückhalteteil 16 umfasst. Im dargestellten Beispiel ist das federnde Verbindungselement 15 am Unterteil 2 angeordnet und weist eine hakenförmige Klinke auf. Das Rückhalteteil 16 besteht aus einem am Oberteil 1 angeordneten Nocken, welcher mit dem federnden Haken des Verbindungselementes 15 zusammenwirkt. Dieses Feststellelement 5 ermöglicht ein leichtes Schliessen der Rohrschelle durch. Verschwenken des Oberteiles 1 und Zusammendrücken der beiden Elemente 15 und 16. Nach dem vollständigen Schliessen des Oberteiles 1 wird dieses gegenüber dem Unterteil 2 sicher gehalten und festgestellt, ohne dass zusätzliche Befestigungsmittel betätigt oder eingeführt werden müssen. Damit wird auch ein in die Durchlassöffnung 3 eingelegtes Rohr in der gewünschten Position festgelegt und gehalten. Im Unterteil 2 ist eine zentrale Bohrung 8 angeordnet, welche dazu dient, ein Befestigungsmittel, z.B. eine Schraube 9 aufzunehmen. Diese Bohrung 8 ist von der Durchlassöffnung 3 her zugänglich, solange die Rohrschelle geöffnet und kein Rohr eingelegt ist. In dieser Ausgangslage kann deshalb die Rohrschelle mit Hilfe eines in die Bohrung 8 eingeführten Befestigungsmittels 9 an einem Trägerelement 10 befestigt, bzw. vormontiert werden. Beim Trägerelement 10 kann es sich um eine beliebige Struktur eines Gerätes oder eines Objektes handeln oder um eine an sich bekannte Tragschiene, welche gleitende Muttern aufweist. Derartige Tragschienen finden beispielsweise im Fahrzeugbau Verwendung und ermöglichen eine einfache Positionierung der Rohrschellen in der gewünschten Position. In den beiden Seitenbereichen 11, 12 weist die Rohrschelle zusätzliche Durchgangsbohrungen 13 und 14 auf, welche zur Aufnahme von zusätzlichen Verbindungselementen zwischen der Rohrschelle und einem Trägerelement 10 dienen. Bei leichten Belastungen genügt die Befestigung der Rohrschelle am Trägerelement mittels dem Befestigungsmittel 9, welches in die Bohrung 8 eingesetzt wird. Auch der Schnappverschluss 5 zwischen dem Ober- und dem Unterteil 1, 2 kann dann die auftretenden Belastungen aufnehmen. Bei grösseren Belastungen kann in mindestens eine der Durchgangsbohrungen 13, 14 ein zusätzliches Verbindungselement, z.B. eine Schraube eingesetzt werden, welche mit einer Mutter oder einer Gewindebohrung am Trägerelement 10 verbunden wird. Dadurch kann eine Verbindung zwischen Rohrschelle und Trägerelement 10 erstellt werden, welche wesentlich höhere Kräfte aufnehmen kann. Gleichzeitig wird auch das Oberteil 1 und das Unterteil 2 der Rohrschelle 2 zusammengespannt und eine Verbindung geschaffen, welche hohe Kräfte aufnehmen kann. Für besonders schwere Belastungen, z.B. bei Eisenbahnfahrzeugen werden in beide Durchgangsbohrungen 13, 14 je eine Schraube eingesetzt.

Die in Fig. 2 dargestellte Aufsicht auf die Oberseite der erfindungsgemässen Rohrschelle gemäss Fig. 1 zeigt die Anordnung der beiden Durchgangsbohrungen 13, 14 und auch das Ineinandergreifen der beiden Rohrschellenteile 1, 2 im Bereiche des Scharniers 4. Die als Beispiel dargestellte Rohrschelle weist im geschlossenen Zustand eine quaderförmige Aussenform auf. Dabei weisen sowohl das Oberteil 1 wie auch das Unterteil 2 je eine nach aussen gerichtete Auflagefläche 6, bzw. 7 auf. Diese beiden Auflageflächen 6, 7 verlaufen parallel zueinander und bilden ebene Montageflächen. Dadurch können zwei oder mehrere Rohrschellen aufeinander gestellt werden, d.h. es können Stapel von befestigten Rohren erstellt werden. Die Befestigung der Rohrschellen erfolgt dabei über lange Schrauben, welche durch die Durchgangsbohrungen 13, 14 gesteckt und mit dem Trägerelement 10 verbunden werden. Diese Ausführungsform ermöglicht ein Stapeln von übereinander angeordneten Rohrschellen in sehr einfacher Weise, ohne dass zwischen, den Rohrschellen zusätzliche Trägerelemente oder Verbindungselemente benötigt werden. Die Seitenteile 17, 18 des Unterteils der Rohrschelle erstrecken sich über die Mittelachse 19 der Durchlassöffnung 3 hinaus in Richtung des Oberteiles 1. Diese Ausgestaltung bringt den zusätzlichen Vorteil, dass Rohre, welche in die Durchlassöffnung 3 eingelegt sind, besser geführt werden, bis das Oberteil 1 geschlossen wird.

Da in vielen Anwendungsfällen mehrere Rohre, welche mit Rohrschellen befestigt werden müssen, nebeneinander verlaufen, besteht der Wunsch, diese so nahe als möglich nebeneinander anzuordnen. Dies wird bei der erfindungsgemässen Rohrschelle möglich, wenn das Scharnier 4 in derjenigen Ecke angeordnet wird, in welcher das verlängerte Seitenteil 18 des Unterteils 2 und die Auflagefläche 6 des Oberteiles 1 aneinanderstossen. Dank dieser Anordnung benötigt das Oberteil 1 bei der Schwenkbewegung in den Seitenbereichen neben der Rohrschelle keinen zusätzlichen Raum für Bewegungen. Dies erbringt den Vorteil, dass benachbarte Rohrschellen Seitenfläche an Seitenfläche aneinandergestossen werden können. Um das Verschwenken des Oberteiles 1 um das Scharnier 4 zu er möglichen, ist der Innenbereich des Oberteiles 1 so ausgebildet, dass er sich nur über einen Bereich von weniger als 180° des Umfanges der Durchlassöffnung 3 erstreckt. Im dargestellten Beispiel erstreckt sich dieser Innenbereich 24 nur über ein Winkelsegment von ca. 140°, wobei dieses Winkelsegment einerseits durch die Mittelachse 19 der Durchlassöffnung, 3 und anderseits durch eine fiktive Ebene 21 begrenzt wird. Diese fiktive Ebene 21 ist durch die zentrale Längsachse der Durchlassöffnung 3 und die Achse 22 des Scharniers 4 gelegt. Diese fiktive Ebene 21 begrenzt den Endbereich 20 des Oberteils 1. Je nach konstruktiver Ausgestaltung und Anordnung des Scharniers 4 mit Bezug zur Mittelachse 19 verändert sich der Winkelbereich, über welchen sich der Innenbereich 24 des Oberteiles 1 erstreckt.

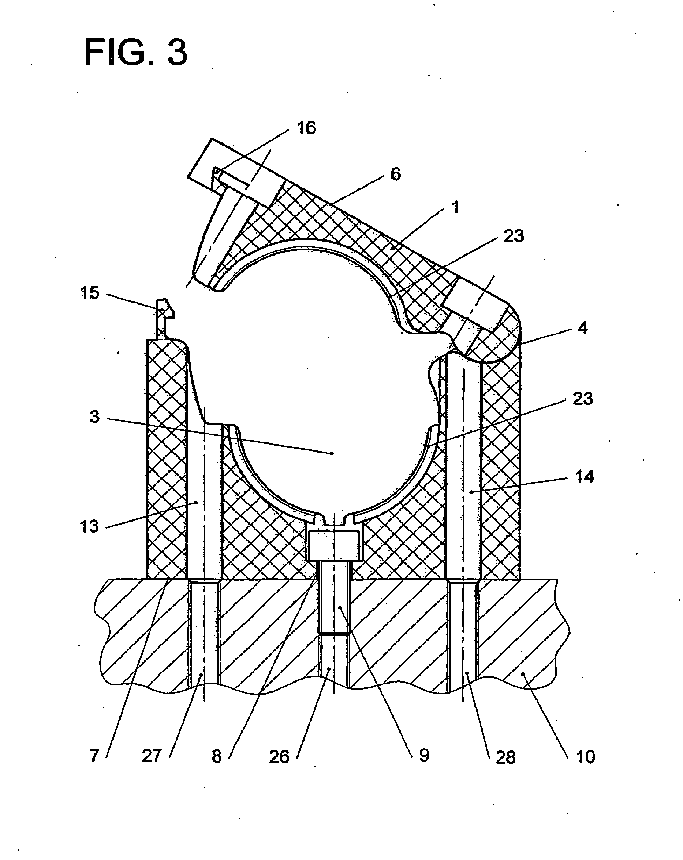

Aus dem in Fig. 3 dargestellten Querschnitt durch die als Beispiel beschriebene Rohrschelle ist die Befestigung der Rohrschelle, bzw. des Unterteiles 2 an einem Trägerelement 10 erkennbar. Beim Trägerelement 10 kann es sich beispielsweise um eine Gehäusewandung handeln. Das Trägerelement 10 weist dabei eine Gewindebohrung 26 auf, in welche die Schraube 9, welche durch die Bohrung 8 gesteckt wird, eingreift. Beidseits der Gewindebohrung 26 sind im Trägerelement 10 zwei weitere Gewindebohrungen 27, 28 angeordnet. Diese dienen der Aufnahme von Schrauben, welche in die Durchgangsbohrungen 13 und 14 eingeführt werden. Wie dargestellt, ist das Oberteil 1 um das Scharnier 4 schwenkbar, so dass die beiden Teile 1, 2 der Rohrschelle geöffnet und zum dargestellten Beispiel ein Wellrohr in die Durchlassöffnung 3 eingelegt werden kann. Danach wird das Oberteil 1 durch Verschwenken geschlossen und durch Eindrücken in das Unterteil 2 der Schnappverschluss 5 zur Wirkung gebracht. Dabei rastet das Rückhalteteil 16 am Oberteil 1 in den Haken am federnden Verbindungselement 15 am Unterteil 2 ein, wodurch sich eine form- und kraftschlüssige Verbindung zwischen den beiden Teilen 1, 2 ergibt. Rohrschellen der erfindungsgemässen Art lassen sich mit Hilfe der Kunststofftechnik leicht und kostengünstig herstellen. Auch die Montage der Rohrschellen selbst sowie das Einlegen der Rohre ist sehr einfach und erfordert nur geringen Zeitaufwand. Es sind nur sehr wenige Teile notwendig, da die Rohrschelle erfindungsgemäss so ausgestaltet ist, dass sie mittels herkömmlichen Mitteln vormontiert werden kann und durch die Wahl der Anzahl von Befestigungsschrauben der ganze Bereich für leichte und schwere Belastungen abgedeckt werden kann. Dadurch, dass die Rohrschellen übereinander gestapelt werden können und damit übereinander liegende Lagen von Rohren befestigt werden können, ohne dass zusätzliche Mittel notwendig werden, ergeben sich erhebliche Zeit- und Kostenvorteile.

## Patentansprüche

1. Rohrschelle umfassend ein Oberteil (1) und ein Unterteil (2), welche eine Durchlassöffnung (3) für ein Rohr umschliessen, wobei diese beiden Teile (1, 2) an einer Seite über ein Scharnier (4) miteinander verbunden sind und an der anderen Seite lösbare Feststellelemente (5) aufweisen, wobei das Oberteil (1) und das Unterteil (2) je eine nach aussen gerichtete und parallel zueinander liegende Auflagefläche (6, 7) aufweisen, und mindestens in einem Seitenbereich (11, 12) der Rohrschelle eine Durchgangsbohrung (13, 14) zur Aufnahme eines zusätzlichen Verbindungselementes zwischen der Rohrschelle (1, 2) und dem Trägerelement (10) vorhanden ist, **dadurch gekennzeichnet, dass** im Unterteil (2) eine von der Durchlassöffnung (3) her zugängliche Bohrung (8) angebracht ist, welche zur Aufnahme eines Befestigungsmittels (9) zwischen der Rohrschelle (1, 2) und einem Trägerelement (10) bestimmt ist, das Scharnier (4) im Bereiche der nach aussen gerichteten Auflagefläche (6) des Oberteiles (1) angeordnet ist, dass sich das Oberteil (1) nur über einen Bereich von weniger als 180° des Umfanges der Durchlassöffnung (3) für das Rohr erstreckt und ein Endbereich (20) des Oberteiles (1), welcher das Scharnier (4) umfasst, etwa durch eine fiktive Ebene (21) begrenzt ist, welche durch die Längsachse der Durchlassöffnung (3) für das Rohr und die Achse (22) des Scharniers (4) zwischen den beiden Teilen (1, 2) der Rohrschelle gelegt ist.

2. Rohrschelle nach Patentanspruch 1, **dadurch gekennzeichnet, dass** das lösbare Feststellelement (5) an einer Seite der beiden Teile (1, 2) der Rohrschelle ein Schnappverschluss ist und am Unterteil (2) oder am Oberteil (1) ein federndes Verbindungselement (15) und am anderen Teil der Rohrschelle ein entsprechendes Rückhalteteil (16) angeordnet ist.

3. Rohrschelle nach Patentanspruch 1 oder 2, **dadurch gekennzeichnet, dass** das Unterteil (2) Seitenteile (17, 18) aufweist, welche sich über die Mittelachse (19) der Durchlassöffnung (3) für das Rohr hinaus in Richtung des Oberteiles (1) erstrecken.

4. Rohrschelle nach einem der Patentansprüche 1 bis 3, **dadurch gekennzeichnet, dass** beide Seitenbereiche (11, 12) der Rohrschelle je eine Durchgangsbohrung (13, 14) für je ein zusätzliches Verbindungselement aufweisen.

5. Rohrschelle nach einem der Patentansprüche 1 bis 4, **dadurch gekennzeichnet, dass** mehrere Rohrschellen übereinander stapelbar sind und dabei zwischen je zwei Rohrschellen die nach aussen gerichteten Auflageflächen (6, 7) aneinander anliegen sowie die Rohrschellen mittels mindestens einem, durch eine Durchgangsbohrung (13, 14) in einem Seitenbereich (11, 12) der Rohrschellen gesteckten Verbindungselement miteinander verbunden sind.

6. Rohrschelle nach einem der Patentansprüche 1 bis 5, **dadurch gekennzeichnet, dass** die Rohrschelle in geschlossenem Zustand eine quaderförmige Aussenform aufweist.

## Claims

1. Pipe clip comprising an upper part (1) and a lower part (2) which surround a through opening (3) for a pipe, said two parts (1, 2) being connected to one another on one side via a hinge (4) and comprising releasable fixing elements (5) on the other side, the upper part (1) and the lower part (2) each comprising a bearing surface (6, 7) oriented outwardly and located parallel to one another, and a through bore (13, 14) being present in at least one side region (11, 12) of the pipe clip to receive an additional connection element between the pipe clip (1, 2) and the carrier element (10), **characterised in that** a bore (8) accessible from the through opening (3) is made in the lower part (2), which bore is intended to receive a securing means (9) between the pipe clip (1, 2) and a carrier element (10), the hinge (4) being arranged in the region of the outwardly oriented bearing surface (6) of the upper part (1), **in that** the upper part (1) extends only over a region of less than 180° of the circumference of the through opening (3) for the pipe and an end region (20) of the upper part (1), which comprises the hinge (4), is approximately delimited by an imaginary plane (21) which lies through the longitudinal axis of the through opening (3) for the pipe and the axis (22) of the hinge (4) between the two parts (1, 2) of the pipe clip.

2. Pipe clip according to claim 1, **characterised in that** the releasable fixing element (5) on one side of the two parts (1, 2) of the pipe clip is a snap closure and a resilient connection element (15) is arranged on the lower part (2) or on the upper part (1) and a corresponding retaining part (16) is arranged on the other part of the.pipe clip.

3. Pipe clip according to claim 1 or 2, **characterised in that** the lower part (2) comprises side parts (17, 18) which extend beyond the central axis (19) of the through opening (3) for the pipe in the direction of the upper part (1) .

4. Pipe clip according to any one of claims 1 to 3, **characterised in that** the two side regions (11, 12) of the pipe clip each comprise a through bore (13, 14) for each additional connection element.

5. Pipe clip according to any one of claims 1 to 4, **characterised in that** a plurality of pipe clips may be stacked on top of one another and, in this connection, between every two pipe clips the outwardly oriented bearing surfaces (6, 7) bear against one another and the pipe clips are connected to one another by means of at least one connection element inserted through a through bore (13, 14) in a side region (11, 12) of the pipe clips.

6. Pipe clip according to any one of claims 1 to 5, **characterised in that**, in the closed state, the pipe clip comprises a rectangular external form.

## Revendications

1. Collier pour tuyaux comprenant une partie supérieure (1) et une partie inférieure (2) qui encerclent une ouverture de passage (3) pour un tuyau, dans lequel ces deux parties (1, 2) sont raccordées l'une à l'autre d'un côté par le biais d'une charnière (4) et présentent de l'autre côté des éléments de fixation amovibles (5), dans lequel la partie supérieure (1) et la partie inférieure (2) présentent chacune une surface d'appui (6, 7) orientée vers l'extérieur, les deux surfaces d'appui étant disposées parallèlement l'une à l'autre, et un alésage de passage (13, 14) est prévu au moins dans une zone latérale (11, 12) du collier pour tuyaux pour le logement d'un élément de liaison supplémentaire entre le collier pour tuyaux (1, 2) et l'élément de support (10), **caractérisé en ce qu'**il est prévu dans la partie inférieure (2) un alésage (8) accessible par l'ouverture de passage (3) qui est conçu pour le logement d'un moyen de fixation (9) entre le collier pour tuyaux (1, 2) et un élément de support (10), la charnière (4) est placée dans la zone de la surface d'appui (6) de la partie supérieure (1) orientée vers l'extérieur, **en ce que** la partie supérieure (1) ne s'étend que sur une zone inférieure à 180° de la circonférence de l'ouverture de passage (3) pour le tuyau et une zone d'extrémité (20) de la partie supérieure (1), qui comprend la charnière (4), est délimitée à peu près par un plan fictif (21) qui passe par l'axe longitudinal de l'ouverture de passage (3) pour le tuyau et l'axe (22) de la charnière (4) entre les deux parties (1, 2) du collier pour tuyaux.

2. Collier pour tuyaux selon la revendication 1, **caractérisé en ce que** l'élément de fixation amovible (5) sur un côté des deux parties (1, 2) du collier pour tuyaux est un dispositif de fermeture encliquetable et un élément de raccordement à ressorts (15) est placé sur la partie inférieure (2) ou sur la partie supérieure (1) et une pièce de retenue correspondante (16) est placée sur l'autre partie du collier pour tuyaux.

3. Collier pour tuyaux selon la revendication 1 ou 2, **caractérisé en ce que** la partie inférieure (2) présente des parties latérales (17, 18) qui s'étendent au-delà de l'axe central (19) de l'ouverture de passage (3) pour le tuyau dans la direction de la partie supérieure (1).

4. Collier pour tuyaux selon l'une quelconque des revendications 1 à 3, **caractérisé en ce que** les deux zones latérales (11, 12) du collier pour tuyaux présentent chacune un alésage de passage (13, 14) pour un élément de raccordement supplémentaire.

5. Collier pour tuyaux selon l'une quelconque des revendications 1 à 4, **caractérisé en ce que** plusieurs colliers pour tuyaux peuvent être superposés les uns sur les autres et les surfaces d'appui (6, 7) orientées vers l'extérieur entre deux colliers pour tuyaux sont adjacentes les unes aux autres et les colliers pour tuyaux sont raccordés les uns aux autres par au moins un élément de raccordement inséré dans un alésage de passage (13, 14) dans une zone latérale (11, 12) des colliers pour tuyaux.

6. Collier pour tuyaux selon l'une quelconque des revendications 1 à 5, **caractérisé en ce que** le collier pour tuyaux présente dans la position fermée une forme quadrilatérale.
